# EUROPÄISCHE PATENTSCHRIFT

(11) **EP 2 703 680 B1**
(45) Veröffentlichungstag und Bekanntmachung des Hinweises auf die Patenterteilung: **02.03.2016**
(21) Anmeldenummer: 13004069.4
(22) Anmeldetag: 16.08.2013
(51) Int. Cl.: F16D 41/36, F16D 27/01

(54) **Nabe, insbesondere für teilweise muskelbetriebene Fahrzeuge**
Hub for at least partially muscle operated vehicles
Moyeu, en particulier pour des véhicules partiellement entraînés par la force musculaire

(30) Priorität: 28.08.2012 DE 102012016945
(43) Veröffentlichungstag der Anmeldung: 05.03.2014
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Intellectual Property Law

(56) Entgegenhaltungen:
- EP-A1- 2 422 996
- DE-U1-202011 108 822
- US-A1- 2009 255 774

## Beschreibung

Die vorliegende Erfindung betrifft eine Nabe für wenigstens teilweise muskelbetriebene Fahrzeuge und insbesondere für Zweiräder. Eine solche Nabe umfasst eine fest stehenden Nabenachse, einen relativ dazu drehbaren Nabenkörper, eine rotierbare Antriebseinrichtung sowie einen Zahnscheibenfreilauf. Eine solche Antriebseinrichtung kann beispielsweise als Rotor ausgeführt sein, an dem ein Ritzel oder aber ein Ritzelsatz montiert werden kann, um das Antriebsdrehmoment über die Antriebseinrichtung auf den Nabenkörper zu übertragen. Gegebenenfalls kann die Antriebseinrichtung auch einstückig mit einem Ritzel oder einem Ritzelsatz ausgeführt sein.

Im Stand der Technik sind Naben bekannt geworden, die eine Freilauffunktion über einen Zahnscheibenfreilauf zur Verfügung stellen. So offenbart die DE 198 476 73 A1 eine Hinterradnabe mit einem Zahnscheibenfreilauf, bei dem zwei Zahnscheiben an den Seitenflächen über axiale und ineinander greifende Verzahnungen verfügen. In Antriebsrichtung wird das aufgebrachte Drehmoment zuverlässig übertragen, während die Zahnscheiben sich bei der umgekehrten Drehrichtung axial auseinanderschieben und so die Freilauffunktion zur Verfügung stellen. Um einen zuverlässigen Eingriff der Zahnscheiben in Antriebsrichtung zu gewährleisten, werden beide Zahnscheiben jeweils über Spiralfedern aufeinander zugedrückt. Die bekannte Nabe funktioniert zuverlässig und hat sich bewährt. Durch Wahl einer geeigneten Federsteifigkeit der Andruckfedern kann ein gutes Ansprechverhalten erzielt werden. Ein gewisser Nachteil ist allerdings, dass an den Zahnscheiben im Freilaufzustand, wenn sich die axialen Verzahnungen auseinanderdrücken, Reibung durch die aufeinander gleitenden Zahnscheiben entsteht. Außerdem entstehen Geräusche, die nicht immer als angenehm empfunden werden. Die Vorbelastungsfedern bringen in der Eingriffsposition schon eine gewisse Kraft auf, um die beiden Zahnscheiben sicher im Eingriff zu halten. Diese Anpresskraft und damit die Reibung wird noch größer, wenn die Freilauffunktion eintritt und die Vorbelastungsfedern auseinandergedrückt und dabei komprimiert werden.

Der nächstliegender Stand der Technik ist die Offenbarung DE 202011108822 U1.

Mit der US 2009/255774 A1 ist eine Nabe für eine Hinterradnabe eines Fahrrads bekannt geworden, bei der ein Zahnscheibenfreilauf vorgesehen ist, der über Magnetkräfte in die Eingriffsposition vorbelastet ist.

Aus der EP 2 422 996 A1 ist eine Nabe mit einem Zahnscheibenfreilauf für ein Fahrrad bekannt geworden, bei der ein ringförmiger Permanentmagnet und ein anderer Permanentmagnet sich magnetisch abstoßen und so den Zahnscheibenfreilauf in die Eingriffsposition vorbelasten. Dadurch nehmen die Vorbelastungskräfte mit steigendem Abstand der beiden Zahnscheiben zu. Es ist deshalb die Aufgabe der vorliegenden Erfindung, eine Nabe zur Verfügung zu stellen, welche eine zuverlässige Funktion ermöglicht und bei der die Anpresskraft des Zahnscheibenfreilaufs nicht derart mit steigendem Abstand zwischen den Freilaufkomponenten zunimmt.

Diese Aufgabe wird gelöst durch eine erfindungsgemäße Nabe mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der Beschreibung der Ausführungsbeispiele.

Eine erfindungsgemäße Nabe ist insbesondere für den Einsatz an wenigstens teilweise muskelbetriebenen Fahrzeugen und insbesondere Zweirädern und vorzugsweise Fahrrädern oder dergleichen vorgesehen. Die Nabe umfasst eine Nabenachse und einen Nabenkörper und eine rotierbare Antriebseinrichtung sowie einen Zahnscheibenfreilauf. Der Zahnscheibenfreilauf weist zwei miteinander zusammenwirkende Eingriffskomponenten auf, die jeweils wenigstens eine Axialverzahnung aufweisen. Die Axialverzahnungen werden über wenigstens eine Vorbelastungseinrichtung in eine Eingriffsstellung vorbelastet. Wenigstens eine der wenigstens einen Vorbelastungseinrichtung ist als Zugkrafteinrichtung ausgeführt, welche beide Axialverzahnungen aufeinander zuzieht.

Die erfindungsgemäße Nabe hat viele Vorteile. Ein erheblicher Vorteil der erfindungsgemäßen Nabe besteht darin, dass wenigstens eine Vorbelastungseinrichtung als Zugkrafteinrichtung ausgeführt ist. Bekannte Naben mit Zahnscheibenfreiläufen verfügen über Druckfedern als Vorbelastungseinrichtungen. Da der zur Verfügung stehende Bauraum in der Regel sehr begrenzt ist, liegt bei derartigen Druckfedern als Vorbelastungseinrichtung eine relativ starke Progression vor, sodass die Vorbelastungskraft mit zunehmender Auslenkung der Zahnscheiben aus dem Eingriffszustand entsprechend stark zunimmt. Das führt zu erhöhter Reibung der Zahnscheiben im Freilaufzustand und zu einem entsprechend starken Geräusch. Durch die erhöhte Reibung wird auch das erforderliche Drehmoment entsprechend groß, um den Freilauf frei zu drehen. Dies führt zu stärkerem Verschleiß und kann gegebenenfalls auch zu einem Durchhängen der Kette führen, was wiederum ein Problem für die Funktion des Kettenantriebs und der Schaltung sein kann. Solche Probleme werden hier weitestgehend vermieden.

Dadurch, dass nun eine auf Zugkraft basierende Vorbelastungseinrichtung eingesetzt wird, können derartige Nachteile vermieden werden. Eine solche Zugkrafteinrichtung wirkt auf beide Axialverzahnungen ein. Die Zugkrafteinrichtung zieht die beiden Vorbelastungseinrichtungen zusammen. Dadurch können andere Verhältnisse eingestellt werden, bei denen der Kraftverlauf über der Auslenkung nicht so stark ansteigt oder sogar abfällt.

Besonders bevorzugt ist wenigstens eine Vorbelastungseinrichtung an wenigstens einer Eingriffskomponente eine Magneteinrichtung oder umfasst eine Magneteinrichtung. Eine solche Ausgestaltung ist besonders vorteilhaft, da eine Vorbelastungseinrichtung, die aufgrund magnetischer Kräfte wirkt, auch eine berührungslose Ausgestaltung ermöglicht. Eine mechanische Feder als Vorbelastungseinrichtung ist dann nicht nötig.

Es ist möglich, dass nur eine Eingriffskomponente eine Magneteinrichtung, die insbesondere einen Permanentmagneten umfasst, aufweist. Die andere Eingriffskomponente besteht dann wenigstens teilweise aus einem magnetisch leitenden Material, welches durch das Magnetfeld der Magneteinrichtung angezogen wird.

Erfindungsgemäß weisen beide Eingriffskomponenten jeweils wenigstens eine Magneteinrichtung auf. Im bestimmungsgemäß eingebauten Zustand ist jeweils eine Magneteinrichtung mit einer der beiden Axialverzahnungen gekoppelt oder verbunden. Dabei sind die Magneteinrichtungen derart angeordnet, dass ein Südpol einer Magneteinrichtung der einen Axialverzahnung benachbart zu einem Nordpol der Magneteinrichtung der anderen Axialverzahnung angeordnet ist, sodass sich die Axialverzahnungen über die zwischen den Magneteinrichtungen wirkenden Magnetkräfte anziehen. Zwei Magneteinrichtungen, wobei jede Axialverzahnung mit einer Magneteinrichtung gekoppelt oder verbunden ist, erlauben mit einfachen Mitteln einen zuverlässigen Aufbau einer Nabe, die auch nur ein geringes Gewicht aufweist.

In bevorzugten Ausgestaltungen weist wenigstens eine Eingriffskomponente wenigstens einen Aufnahmeraum für wenigstens eine Magneteinrichtung auf. Bei einer solchen Ausgestaltung kann die Magneteinrichtung an oder in dem Aufnahmeraum der Eingriffskomponente platziert und dort fixiert werden. Beispielsweise kann eine solche Magneteinrichtung kraft- und/oder formschlüssig in dem Aufnahmeraum aufgenommen werden. Die Magneteinrichtung kann beispielsweise eingesetzt, eingeklebt, angeschraubt oder sonst wie mit der Eingriffskomponente gekoppelt oder verbunden oder daran aufgenommen werden. Vorteilhaft ist eine verliersichere und z. B. feste Verbindung zu der Axialverzahnung, sodass durch das Magnetfeld der Magneteinrichtung entsprechende Kräfte auf die Axialverzahnung wirken. Die Magneteinrichtung kann auch lose oder mit etwas Spiel in der Eingriffskomponente aufgenommen sein, sofern sich die Eingriffskomponente im Wesentlichen zusammen mit der Magneteinrichtung bewegt. Möglich und bevorzugt ist es auch, dass wenigstens eine Eingriffskomponente an sich wenigstens teilweise magnetisch ist, sodass für wenigstens eine Eingriffskomponente keine separate Magneteinrichtung nötig ist.

Ein erheblicher Vorteil von magnetischen Vorbelastungseinrichtungen ist, dass weniger Verschleiß auftritt. Auch die bewegte Masse kann reduziert werden, wodurch eine bessere Dynamik entsteht.

In bevorzugten Ausgestaltungen umfasst die Magneteinrichtung eine Trägereinheit oder mehrere Trägereinheiten und daran angeordnete Magneteinheiten. Dabei können die Magneteinheiten auf bekannte Art und Weise an der Trägereinheit befestigt werden. Bei der Befestigung der Magneteinheiten an der Trägereinheit wird insbesondere darauf geachtet, dass die Orientierung von Nord- und Südpol der Magneteinheiten der gewünschten Orientierung entspricht. Dabei erfolgt die Anordnung derart, dass sich die Eingriffskomponenten durch das Magnetfeld anziehen. Im Freilauffalle werden die Eingriffskomponenten bzw. die Axialverzahnungen gegen die axial nach innen ziehende Kraft des Feldes der Magneteinrichtungen auseinandergedrückt.

In allen Ausgestaltungen ist es möglich, dass die oder wenigstens eine Magneteinrichtung mehrere Magneteinheiten umfasst, die in Aufnahmeeinheiten der Eingriffskomponente und/oder der Axialverzahnung angeordnet sind. Beispielsweise kann eine Eingriffskomponente als Zahnscheibe ausgebildet sein. In bevorzugten Ausgestaltungen sind beide Eingriffskomponenten jeweils als Zahnscheibe ausgebildet. Eine solche Zahnscheibe besteht aus einer ringartigen Struktur, die an einer axialen Seitenfläche eine Axialverzahnung aufweist. Die ringartige Struktur kann beispielsweise Bohrlöcher oder dergleichen aufweisen, in die von der der Axialverzahnung gegenüberliegenden Seite aus Magneteinheiten eingeführt werden können. Wenn bei beiden Zahnscheiben entsprechend vorgegangen wird und die Orientierung der Magneteinheiten entsprechend eingehalten wird, ziehen sich die benachbarten Zahnscheiben durch die Magnetkraft der Magneteinrichtungen entsprechend an.

Zur Einstellung der Stärke des Magnetfeldes ist es möglich, dass nicht alle Aufnahmeeinheiten mit Magneteinheiten versehen werden, sondern nur eine geringere Anzahl.

Um das wirkende Magnetfeld fein justieren zu können, können auch Magneteinheiten oder Magneteinrichtungen aus unterschiedlichen Materialien oder unterschiedlich starke Magneteinheiten eingesetzt werden.

Eine unterschiedliche Anzahl an Magneteinheiten und/oder Magneteinrichtungen mit unterschiedlich starken Magneteinheiten bieten auch den Vorteil, dass je nach Anwendungsbereich unterschiedliche Bedingungen eingestellt oder vorgegeben werden können. So werden bei einem Mountainbike für einen schnellen Eingriff oft viele Zähne auf einer Zahnscheibe vorgesehen. Dann kann eine relativ starkes Magnetfeld mit gegebenenfalls vielen und/oder starken Magneteinheiten bevorzugt sein. Bei einem Rennrad hingegen werden oftmals Zahnscheiben mit einer geringeren Zähnezahl (z. B. 36 statt 72 und somit halb so viel) eingesetzt, die im Freilaufzustand weniger Reibung verursachen. Dort können nun weniger und/oder schwächere Magneteinheiten eingesetzt werden. Durch diese Weiterbildung der Erfindung kann ein unterschiedlich starkes Magnetfeld mit vernünftigem Aufwand realisiert werden.

Besonders bevorzugt sind beide Eingriffskomponenten als Zahnscheiben ausgebildet. Dabei ist die eine Zahnscheibe drehfest und axial verschiebbar an dem Nabenkörper aufgenommen und die andere Zahnscheibe ist drehfest und axial verschiebbar an der Antriebseinrichtung aufgenommen.

Es ist auch möglich, dass eine der Axialverzahnungen direkt an dem Nabenkörper oder an der Antriebseinrichtung vorgesehen ist. Beispielsweise kann eine Axialverzahnung einstückig mit der Antriebseinrichtung ausgebildet sein. Bei einer solchen Ausgestaltung bildet die eine Eingriffskomponente die Antriebseinrichtung und die andere Eingriffskomponente ist als Zahnscheibe ausgebildet, die drehfest aber axial verschiebbar in dem Nabenkörper aufgenommen ist.

Möglich ist es auch, dass eine Axialverzahnung drehfest und in axialer Richtung fest mit dem Nabenkörper verbunden ist und dass die andere Axialverzahnung drehfest aber axial verschiebbar in der Antriebseinrichtung aufgenommen ist.

Es ist auch möglich, dass wenigstens eine mechanische Vorbelastungseinrichtung vorgesehen ist, welche als Zugfeder ausgebildet ist und beide Axialverzahnungen aufeinander zuzieht bzw. zusammenzieht. Eine solche Vorbelastungseinrichtung hintergreift insbesondere beide Zahnscheiben. Ein mittlerer Bereich einer solchen Vorbelastungseinrichtung kann beispielsweise elastisch, ziehharmonikaartig, als Zugfeder oder dergleichen ausgeführt sein.

Möglich ist auch ein Zylinder oder zylinderartiger Körper aus einem elastischen Material, welcher die Vorbelastungseinrichtungen zusammenzieht. Dabei ist es möglich, dass die Zugkrafteinrichtung als mechanische Vorbelastungseinrichtung innen durch die Eingriffskomponenten durchragt und von außen auf die Vorbelastungseinrichtungen einwirkt. Auch hier wirkt die Vorbelastungseinrichtung als Zugkrafteinrichtung.

Bei einer solchen Ausgestaltung kann auch bei einer Auslenkung der Zahnscheiben aus dem Eingriffszustand nur eine geringere oder praktisch keine Änderung der Federsteifigkeit auftreten. Je nach Auslegung können auch größere Änderungen der Federsteifigkeiten auftreten. Bei dieser Lösung ist ein Vorteil, dass die beiden Zahnscheiben eine Baueinheit bilden, die auch im ausgebauten Zustand durch die Vorbelastungseinrichtung zusammen gehalten wird.

In allen Ausgestaltungen ist es auch möglich, dass wenigstens eine mechanische Vorbelastungseinrichtung vorgesehen ist, welche als Druckfeder ausgeführt ist und welche eine Axialverzahnung wenigstens unter bestimmten Umständen auf die andere Axialverzahnung vorbelastet.

Es ist auch bevorzugt, dass eine solche mechanische Vorbelastungseinrichtung zusätzlich zu einer magnetischen Zugkrafteinrichtung vorgesehen ist, um bei großen Auslenkungen der Zahnscheiben die Anpresskraft der Zahnscheiben aufeinander zu erhöhen oder sicher zu stellen. Magnetische Kräfte zwischen zwei magnetischen Komponenten nehmen mit ihren Abstand voneinander ab. Bei zu großem Abstand oder relativ schwachen magnetischen Komponenten kann die Kraft ein Mindestmaß unterschreiten. Um dem entgegen zu wirken, kann eine zusätzliche mechanische Druckfeder vorgesehen sein, die beispielsweise erst bei großen Auslenkungen wirkt und die insbesondere nur relativ geringe Kräfte aufbringt. Dann wird auch bei großen Abständen ein Mindestmaß an Kraft erzeugt.

Weitere Vorteile und Merkmale der vorliegenden Erfindung ergeben sich aus der Beschreibung der Ausführungsbeispiele, die mit Bezug auf die beiliegenden Figuren im Folgenden erläutert werden.

In den Figuren zeigen:
- Fig. 1: einen schematischen Querschnitt durch eine erfindungsgemäße Nabe;
- Fig. 2: das Detail "Z" aus Fig. 1 in vergrößerter Darstellung;
- Fig. 3: die beiden Zahnscheiben der Nabe nach Fig. 1 in perspektivischer Ansicht;
- Fig. 4: alternative Zahnscheiben für die Nabe nach Fig. 1; und
- Fig. 5: einen weiteren stark schematischen Schnitt durch einen Zahnscheibenfreilauf der Nabe nach Fig. 1.

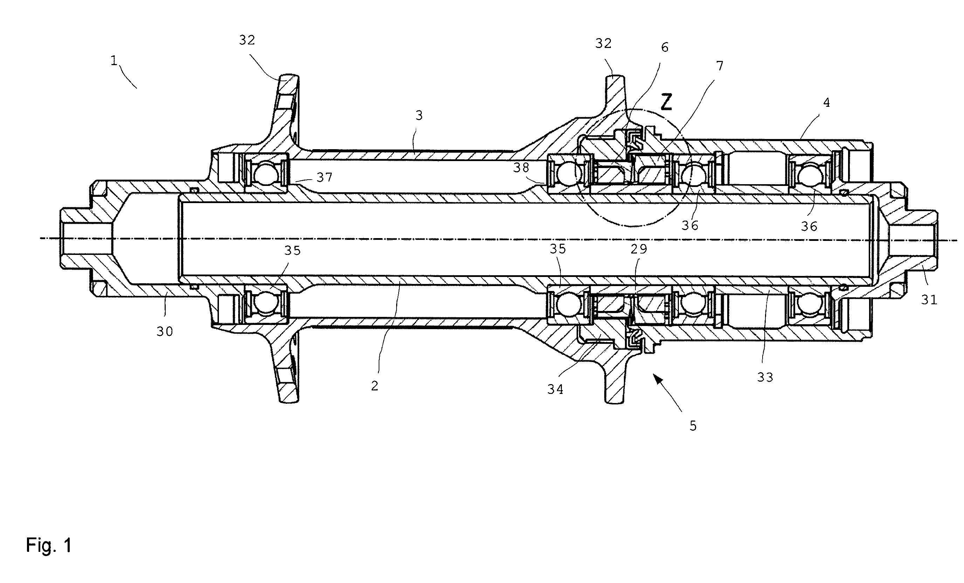

Fig. 1 zeigt eine Nabe 1, die als Hinterradnabe ausgeführt ist und für den Einsatz an wenigstens teilweise muskelbetriebenen Fahrzeugen und insbesondere Zweirädern wie Fahrrädern geeignet ist.

Die Nabe 1 verfügt über eine fest stehende Achse 2 und einen über Lager 35 gegenüber der fest stehenden Achse drehbar gelagerten Nabenkörper 3, der das Nabengehäuse bildet und über Speichenflansche 32 zur Aufnahme von Speichen verfügt. Eine Antriebseinrichtung 4 ist hier als Rotor ausgeführt, an dem eine Ritzelpaket aufgenommen werden kann. Ein Zahnscheibenfreilauf 5 zwischen der Antriebseinrichtung 4 und dem Nabenkörper 3 ermöglicht eine Freilauffunktion.

Die Antriebseinrichtung 4 ist über Lager 36 drehbar gegenüber der Nabenachse 2 gelagert. Auf die Enden der fest stehenden Nabenachse 2 sind Adapterringe 30 und 31 in Form von Endanschlägen aufgesteckt. An den Adapterringen 30 und 31 sind Dichtungen vorgesehen, um das Innere des Nabenkörpers 3 bzw. der Antriebseinrichtung 4 vor dem Eindringen von Staub und Wasser zu schützen.

Bei der Montage werden die Adapterringe 30 und 31 in die Ausfallenden eines Fahrrads eingeschoben. Über einen hier nicht dargestellten Schnellspanner kann die Nabe fixiert werden. Möglich und bevorzugt ist auch der Einsatz einer Steckachse. Dabei erfolgt ein Kraftschluss zwischen den beiden Ausfallenden. Die Kraft wird hier von dem Adapterring 30 über den Innenring des Lagers 35 auf den Absatz 37 der Achse und entlang der Achse 2 über den Absatz 38 und den Innenring des Lagers 35 auf die Distanzhülse 29 übertragen. Von dort wird die Kraft über den Innenring des Lagers 36 und die Distanzhülse 33 auf den Innenring des zweiten Lagers 36 und schließlich auf den Adapterring 31 übertragen und in das andere Ausfallende eingeleitet.

Der Zahnscheibenfreilauf 5 verfügt über zwei Eingriffskomponenten 6 und 7, die hier als Zahnscheiben 25 und 26 ausgeführt sind. Die Zahnscheibe 25 verfügt über die Axialverzahnung 8 und die Zahnscheibe 26 weist die Axialverzahnung 9 auf, die in der in Fig. 1 dargestellten Eingriffsstellung 11 im Eingriff miteinander sind.

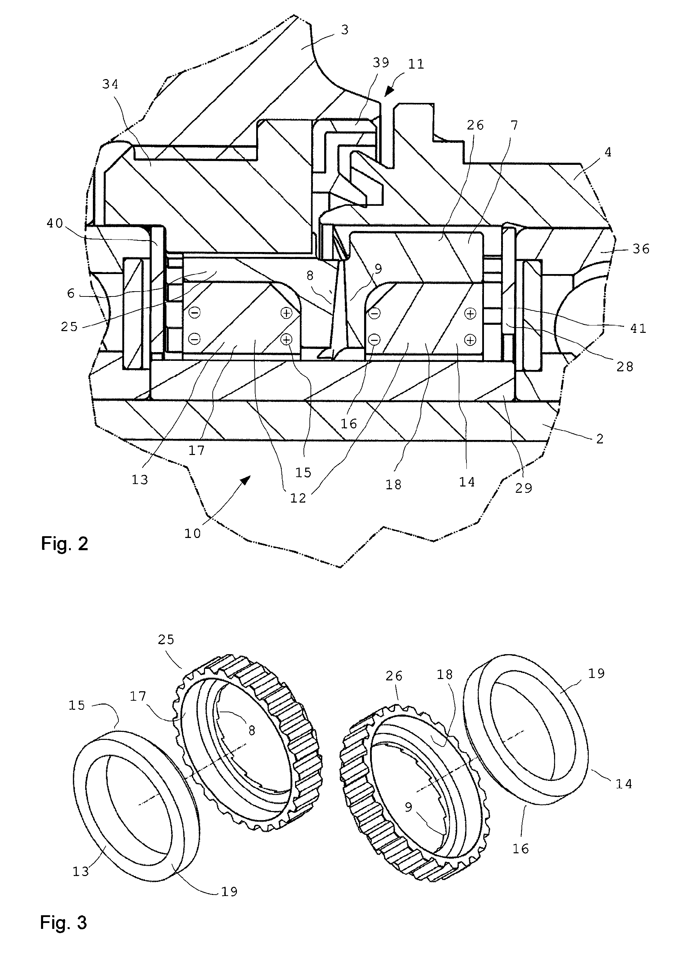

Fig. 2 zeigt das vergrößerte Detail "Z", um den Zahnscheibenfreilauf 5 besser erläutern zu können. Die Eingriffskomponente 6 bzw. Zahnscheibe 25 ist drehfest und axial verschiebbar in dem Gewindering 34 aufgenommen, der in den Nabenkörper 3 eingeschraubt ist. Während der Nabenkörper 3 vorzugsweise aus einem Leichtmetall oder dergleichen besteht, besteht der Gewindering 34 insbesondere aus einem festeren Material wie Stahl. Dadurch wird eine höhere Lebensdauer erzielt. Die Eingriffskomponente 7 bzw. Zahnscheibe 26 ist drehfest und axial verschiebbar in der Antriebseinrichtung 4 aufgenommen, die vorzugsweise aus einem festeren Material wie Stahl besteht. Zur Dichtung zwischen der Antriebseinrichtung 4 und dem Nabenkörper 3 ist eine Dichtung 39 vorgesehen, die eine Labyrinthdichtung und eine Elastomerdichtung umfassen kann.

In den Aufnahmeraum 17 der Zahnscheibe 25 ist eine Magneteinrichtung 13 eingesetzt. In den Aufnahmeraum 18 der Zahnscheibe 26 ist eine Magneteinrichtung 14 eingesetzt. Dabei sind die Magneteinrichtungen 13 und 14 so angeordnet, dass der Südpol 15 der Magneteinrichtung 13 benachbart zu dem Nordpol 16 der Magneteinrichtung 14 angeordnet ist.

Die Magneteinrichtungen 13 und 14 bilden so die Zugkrafteinrichtung 12 als Vorbelastungseinrichtung 10, die dafür sorgt, dass die beiden Zahnscheiben 25 und 26 in die Eingriffsstellung 11 vorbelastet werden.

Seitlich der Zahnscheiben 25 und 26 können Anschläge 40 und 41 vorgesehen sein, die eine axiale Bewegung der Zahnscheiben begrenzen, um beispielsweise eine Blockade des Freilaufes zu verhindern.

Möglich und bevorzugt ist es auch, dass die Teile 40 und 41 beispielsweise als Vorbelastungseinrichtung 28 dienen. Dann sorgen die Vorbelastungseinrichtungen 28 insbesondere nur bei einer großen Auslenkung für eine Gegenkraft. Dazu kann eine solche Vorbelastungseinrichtung 28 beispielsweise aus einem elastischen Material bestehen, welches kompressibel ist.

Fig. 3 zeigt die Ausgestaltungen der Zahnscheiben 25 und 26 nach Fig. 2 in perspektivischer Darstellung. Dabei ist die radiale Außenverzahnung der Zahnscheiben 25 und 26 erkennbar. Mit dieser Außenverzahnung gleiten die Zahnscheiben 25 und 26 in entsprechenden radialen Innenverzahnungen in dem Gewindering 34 und in der Antriebseinrichtung 4. In den Aufnahmeräumen 17 und 18 werden die Magneteinrichtungen 13 und 14 fest aufgenommen. Beispielsweise werden die Magneteinrichtungen 13 und 14 über einen Presssitz jeweils in den Zahnscheiben 25 und 26 befestigt. Möglich ist es auch, dass die Magneteinrichtungen 13 und 14 in die Zahnscheiben 25 und 26 eingeklebt oder sonst wie dort befestigt werden. Die Magneteinrichtung 14 ist hier als Magnetring 19 ausgeführt und wird mit ihrer der Zahnscheibe 26 zugewandten Stirnseite, die hier den Nordpol 16 der Magneteinrichtung 14 bildet, in die Zahnscheibe 26 eingeschoben.

In die Zahnscheibe 25 wird die Magnetscheibe 13 mit der Stirnseite, die den Südpol 15 bildet, zuvorderst eingeschoben, sodass sich beide Zahnscheiben 25 und 26 gegenseitig anziehen. Durch das wirkende Magnetfeld ziehen sich die beiden Zahnscheibe 25 und 26 zusammen.

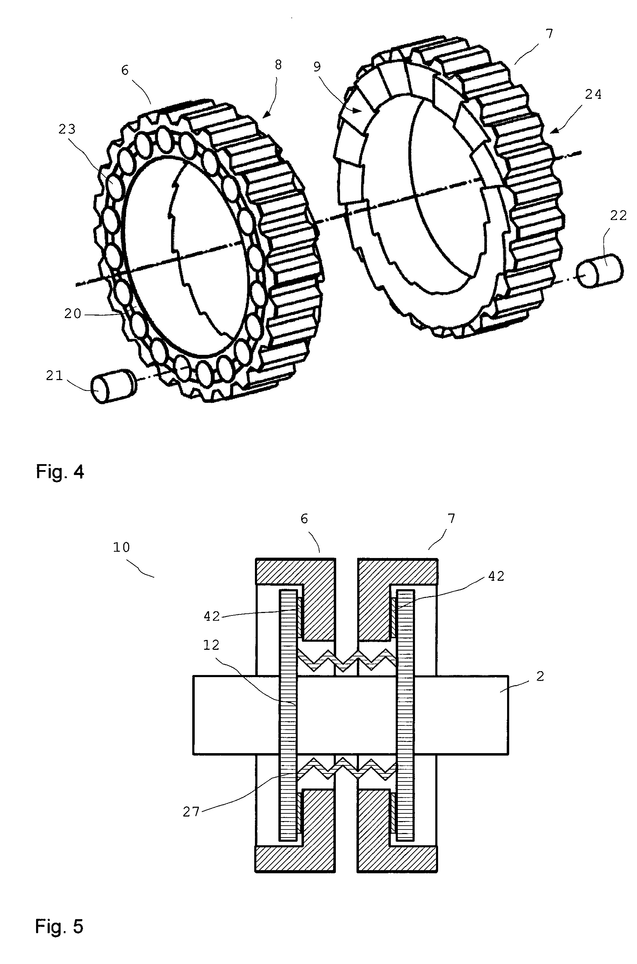

Fig. 4 zeigt Varianten von Zahnscheiben 25 und 26. Beispielsweise kann die an sich massiv ausgebildete Zahnscheibe 25 über Bohrungen als Aufnahmeeinheiten 23 verfügen, in die Magneteinheiten 21 einführbar sind. Beim Einführen der Magneteinheiten 21 in die Aufnahmeeinheiten 23 wird auf die magnetische Orientierung der Magneteinheit 21 geachtet.

Möglich ist es aber auch, dass die Zahnscheiben 25 und 26 mit einem Einsatz als Trägereinheit 20 versehen werden, wobei in der Trägereinheit 20 entsprechende Aufnahmeeinheiten 23 zur Aufnahme entsprechender Magneteinheiten 21 vorgesehen sind. Bei einer solchen Ausgestaltung kann die Trägereinheit 20 aus einem leichteren Material wie beispielsweise aus einem Kunststoff bestehen, sodass das Gesamtgewicht der Nabe 1 gesenkt werden kann.

Fig. 5 zeigt eine stark schematische Darstellung eines Ausführungsbeispiels, bei dem der Zahnscheibenfreilauf 5 über Zahnscheiben 6 und 7 verfügt, die über eine mechanische Vorbelastungseinrichtung 27 aufeinander zugezogen werden. Hier wirkt die mechanische Feder als Zugkrafteinrichtung 12. Um die Reibung der Zugkrafteinrichtung 12 gegenüber den Zahnscheiben 25 und 26 im Freilaufzustand zu verringern, kann ein entsprechendes Schmiermittel eingebracht werden. Möglich ist auch eine Lagerung der mechanischen Feder gegenüber einer oder beiden Zahnscheiben beispielsweise über als Nadellager 42 ausgeführte Lager, die gegebenenfalls über keine Gehäuse, sondern nur ein Nadelkäfig verfügen. Möglich ist es, das Lager 42 an beiden Zahnscheiben 25 und 26 oder nur an einer vorzusehen.

Insgesamt stellt die Erfindung eine Nabe 1 zur Verfügung, welche sowohl im Eingriffszustand als auch im Freilaufzustand günstige Kraftverhältnisse zur Verfügung stellen kann. Dabei kann die Reibung im Freilaufzustand verringert werden, wodurch sich auch die Geräuschentwicklung reduziert. Durch den Einsatz von Permanentmagneten, die so in den Zahnscheiben angeordnet werden, dass sich die Zahnscheiben gegenseitig anziehen, kann eine besonders einfache Ausgestaltung realisiert werden, womit eine dauerhaft zuverlässige Funktion möglich ist. Falls die Anziehungskraft zwischen den beiden Zahnscheiben im Freilaufzustand nicht ausreichen sollte, kann beispielsweise über eine mechanische Druckfeder mit geringer Federkraft die Vorbelastungskraft von außen vergrößert werden. Dadurch kann beispielsweise ein Rückgang der Anpresskraft mit zunehmender Auslenkung der Zahnscheiben gegeneinander ausgeglichen werden.

**Bezugszeichenliste:**

| | | | |
|---|---|---|---|
| 1 | Nabe | 23 | Aufnahmeeinheit |
| 2 | Nabenachse | 24 | Aufnahmeeinheit |
| 3 | Nabenkörper | 25 | Zahnscheibe |
| 4 | Antriebseinrichtung | 26 | Zahnscheibe |
| 5 | Zahnscheibenfreilauf | 27 | Vorbelastungseinrichtung |
| 6 | Eingriffskomponente | 28 | Vorbelastungseinrichtung |
| 7 | Eingriffskomponente | 29 | Distanzhülse |
| 8 | Axialverzahnung | 30 | Adapterring |
| 9 | Axialverzahnung | 31 | Adapterring |
| 10 | Vorbelastungseinrichtung | 32 | Speichenflansch |
| 11 | Eingriffsstellung | 33 | Distanzhülse |
| 12 | Zugkrafteinrichtung | 34 | Gewindering |
| 13 | Magneteinrichtung | 35 | Lager |
| 14 | Magneteinrichtung | 36 | Lager |
| 15 | Südpol | 37 | Absatz |
| 16 | Nordpol | 38 | Absatz |
| 17 | Aufnahmeraum | 39 | Dichtung |
| 18 | Aufnahmeraum | 40 | Anschlag |
| 19 | Magnetring | 41 | Anschlag |
| 20 | Trägereinheit | 42 | Lager |
| 21 | Magneteinheit | | |
| 22 | Magneteinheit | | |

## Patentansprüche

1. Nabe (1) für wenigstens teilweise muskelbetriebene Fahrzeuge und insbesondere Zweiräder mit einer Nabenachse (2) und einem Nabenkörper (3) und einer rotierbaren Antriebseinrichtung (4) und mit einem Zahnscheibenfreilauf (5),
welcher zwei miteinander zusammenwirkende Eingriffskomponenten (6, 7) mit jeweils wenigstens einer Axialverzahnung (8, 9) aufweist,
wobei die Axialverzahnungen (8, 9) über wenigstens eine Vorbelastungseinrichtung (10) in eine Eingriffsstellung (11) vorbelastet werden,
wobei wenigstens eine Vorbelastungseinrichtung (10) als Zugkrafteinrichtung (12) ausgeführt ist, welche beide Axialverzahnungen (8, 9) aufeinander zu zieht,
**dadurch gekennzeichnet,**
**dass** an beiden Eingriffskomponenten (6, 7) jeweils eine Magneteinrichtung (13, 14) vorgesehen ist und im bestimmungsgemäß eingebauten Zustand mit beiden Axialverzahnungen (8, 9) jeweils eine Magneteinrichtung (13, 14) verbunden ist, derart, dass ein Südpol (15) einer Magneteinrichtung (13) der einen Axialverzahnung (8) benachbart zu einem Nordpol (16) der Magneteinrichtung (14) der anderen Axialverzahnung (9) angeordnet ist, sodass sich die Axialverzahnungen (8, 9) über die zwischen den Magneteinrichtungen (13, 14) wirkenden Magnetkräfte anziehen.

2. Nabe (1) nach Anspruch 1, wobei wenigstens eine Eingriffkomponente (6, 7) einen Aufnahmeraum (17, 18) für wenigstens eine Magneteinrichtung (13, 14) aufweist.

3. Nabe (1) nach wenigstens einem der vorhergehenden Ansprüche, wobei die Magneteinrichtung (13, 14) wenigstens einen Magnetring (19) umfasst, der an der Eingriffkomponente (6, 7) aufgenommen ist.

4. Nabe (1) nach wenigstens einem der vorhergehenden Ansprüche, wobei die Magneteinrichtung (13, 14) eine Trägereinheit (20) und daran angeordnete Magneteinheiten (21, 22) umfasst.

5. Nabe (1) nach wenigstens einem der vorhergehenden Ansprüche, wobei die Magneteinrichtung (13, 14) mehrere Magneteinheiten (21, 22) umfasst, die in Aufnahmeeinheiten (23, 24) der Eingriffskomponente (6, 7) angeordnet sind.

6. Nabe (1) nach wenigstens einem der vorhergehenden Ansprüche, wobei wenigstens eine Eingriffskomponente (6, 7) als Zahnscheibe (25, 26) ausgebildet ist.

7. Nabe (1) nach wenigstens einem der vorhergehenden Ansprüche, wobei beide Eingriffkomponenten (6, 7) als Zahnscheiben (25, 26) ausgebildet sind und wobei die eine Zahnscheibe (25) drehfest und axial verschiebbar an dem Nabenkörper (3) und die andere Zahnscheibe (26) drehfest und axial verschiebbar an der Antriebseinrichtung (4) angeordnet ist.

8. Nabe (1) nach wenigstens einem der vorhergehenden Ansprüche, wobei eine Eingriffkomponente (7) als Antriebseinrichtung (4) mit daran befestigter Axialverzahnung (9)
oder wobei eine Eingriffkomponente (7) als Nabenkörper (3) mit daran befestigter Axialverzahnung (8) ausgeführt ist.

9. Nabe (1) nach wenigstens einem der vorhergehenden Ansprüche, wobei wenigstens eine mechanische Vorbelastungseinrichtung (27) vorgesehen ist, welche als Zugfeder ausgebildet ist und beide Axialverzahnungen (8, 9) aufeinander zu zieht.

10. Nabe (1) nach wenigstens einem der vorhergehenden Ansprüche, wobei wenigstens eine mechanische Vorbelastungseinrichtung (28) vorgesehen ist, welche als Druckfeder die eine Axialverzahnung (8) auf die andere Axialverzahnung (9) vorbelastet.

## Claims

1. Hub (1) for at least partially muscle-powered vehicles and in particular two-wheeled vehicles having a hub axle (2) and a hub body (3) and a rotatable driving device (4) and having a toothed disk freewheel (5), which comprises two engagement components (6, 7) cooperating with one another having at least one axial toothing (8, 9) each, wherein the axial toothings (8, 9) are biased to an engaging position (11) via at least one biasing device (10), wherein at least one biasing device (10) is configured as a pulling force device (12) which pulls both the axial toothings (8, 9) toward one another,
**characterized in that** both engagement components (6, 7) are provided with a magnetic device (13, 14) each and when installed as intended one magnetic device (13, 14) each is connected with both the axial toothings (8, 9) such that a south pole (15) of a magnetic device (13) of one of the axial toothings (8) is disposed adjacent to a north pole (16) of the magnetic device (14) of the other of the axial toothings (9) such that the axial toothings (8, 9) attract one another via the magnetic forces acting between the magnetic devices (13, 14).

2. The hub (1) according to claim 1 wherein at least one engagement component (6, 7) comprises a receiving space (17, 18) for at least one magnetic device (13, 14).

3. The hub (1) according to at least one of the preceding claims wherein the magnetic device (13, 14) comprises at least one magnetic ring (19) which is received at the engagement component (6, 7).

4. The hub (1) according to at least one of the preceding claims wherein the magnetic device (13, 14) comprises a carrier unit (20) and magnetic units (21, 22) disposed thereat.

5. The hub (1) according to at least one of the preceding claims wherein the magnetic device (13, 14) comprises multiple magnetic units (21, 22) disposed in receiving units (23, 24) of the engagement component (6, 7).

6. The hub (1) according to at least one of the preceding claims wherein at least one engagement component (6, 7) is configured as a toothed disk (25, 26).

7. The hub (1) according to at least one of the preceding claims wherein both engagement components (6, 7) are configured as toothed disks (25, 26) and wherein one of the toothed disks (25) is disposed non-rotatably and axially displaceably at the hub body (3) and the other of the toothed disks (26) is disposed non-rotatably and axially displaceably at the driving device (4).

8. The hub (1) according to at least one of the preceding claims wherein an engagement component (7) is configured as a driving device (4) with an axial toothing (9) fastened thereto or wherein an engagement component (7) is configured as a hub body (3) with an axial toothing (8) fastened thereto.

9. The hub (1) according to at least one of the preceding claims wherein at least one mechanical biasing device (27) is provided which is configured as an extension spring and pulls both axial toothings (8, 9) toward one another.

10. The hub (1) according to at least one of the preceding claims wherein at least one mechanical biasing device (28) is provided which acting as a compression spring biases one of the axial toothings (8) toward the other of the axial toothings (9).

## Revendications

1. Moyeu (1) pour des véhicules entraînés au moins partiellement par force musculaire et en particulier bicyclettes, comprenant un axe de moyeu (2) et un corps de moyeu (3) et un dispositif d'entraînement (4) apte à être tourné ainsi qu'une roue libre à disque denté (5) qui comprend deux composants d'engrènement (6, 7) ayant chacun au moins une denture axiale (8, 9) et agissant de concert l'un avec l'autre, les dentures axiales (8, 9) étant précontraintes dans une position d'engrènement (11) par au moins un dispositif de précontrainte (10), au moins un dispositif de précontrainte (10) étant réalisé en tant que dispositif d'effort de traction (12) qui tire l'une vers l'autre les deux dentures axiales (8, 9), **caractérisé par le fait qu'**un dispositif magnétique (13, 14) est prévu respectivement sur les deux composants d'engrènement (6, 7) et que, à l'état de montage conforme, un dispositif magnétique (13, 14) est relié respectivement aux deux dentures axiales (8, 9) de telle sorte qu'un pôle sud (15) d'un dispositif magnétique (13) de l'une (8) des dentures axiales est disposé de manière voisine d'un pôle nord (16) du dispositif magnétique (14) de l'autre denture axiale (9) de sorte que les dentures axiales (8, 9) s'attirent par les forces magnétiques agissant entre les dispositifs magnétiques (13, 14).

2. Moyeu (1) selon la revendication 1, dans lequel au moins un composant d'engrènement (6, 7) présente un espace de logement (17, 18) pour au moins un dispositif magnétique (13, 14).

3. Moyeu (1) selon l'une au moins des revendications précédentes, dans lequel le dispositif magnétique (13, 14) comprend au moins une bague magnétique (19) qui est reçue sur le composant d'engrènement (6, 7).

4. Moyeu (1) selon l'une au moins des revendications précédentes, dans lequel ledit dispositif magnétique (13, 14) comprend une unité de support (20) et des unités magnétiques (21, 22) disposées sur celle-ci.

5. Moyeu (1) selon l'une au moins des revendications précédentes, dans lequel ledit dispositif magnétique (13, 14) comprend une pluralité d'unités magnétiques (21, 22) qui sont disposées dans des unités de logement (23, 24) du composant d'engrènement (6, 7).

6. Moyeu (1) selon l'une au moins des revendications précédentes, dans lequel au moins un composant d'engrènement (6, 7) est réalisé comme disque denté (25, 26).

7. Moyeu (1) selon l'une au moins des revendications précédentes, dans lequel les deux composants d'engrènement (6, 7) sont réalisés en tant que disques dentés (25, 26) et dans lequel l'un (25) des disques dentés est disposé de manière solidaire en rotation et à coulissement axial sur le corps de moyeu (3) et l'autre disque denté (26) est disposé de manière solidaire en rotation et à coulissement axial sur le dispositif d'entraînement (4).

8. Moyeu (1) selon l'une au moins des revendications précédentes, dans lequel un composant d'engrènement (7) est réalisé en tant que dispositif d'entraînement (4) ayant une denture axiale (9) fixée sur celui-ci ou dans lequel un composant d'engrènement (7) est réalisé en tant que corps de moyeu (3) ayant une denture axiale (8) fixée sur celui-ci.

9. Moyeu (1) selon l'une au moins des revendications précédentes, dans lequel au moins un dispositif de précontrainte mécanique (27) est prévu qui est réalisé comme ressort de traction et qui tire l'une vers l'autre les deux dentures axiales (8, 9).

10. Moyeu (1) selon l'une au moins des revendications précédentes, dans lequel au moins un dispositif de précontrainte mécanique (28) est prévu qui, en tant que ressort de pression, précontraint l'une (8) des dentures axiales vers l'autre denture axiale (9).
